# EUROPÄISCHE PATENTSCHRIFT

(11) **EP 1 100 230 B1**
(45) Veröffentlichungstag und Bekanntmachung des Hinweises auf die Patenterteilung: **28.06.2006**
(21) Anmeldenummer: 00124064.7
(22) Anmeldetag: 06.11.2000
(51) Int. Cl.: H04L 12/44, B64D 47/00, H04L 12/56

(54) **Datenübertragungssystem für Luftfahrzeuge**
Data transmission system for aircrafts
Système de transmission de données pour avions

(30) Priorität: 12.11.1999 DE 19954377
(43) Veröffentlichungstag der Anmeldung: 16.05.2001
(73) Patentinhaber: Airbus Deutschland GmbH, 21129 Hamburg (DE)
(72) Erfinder: Moreaux, Jean-Paul, 21635 Jork (DE)
(74) Vertreter: Hansmann, Dierk

(56) Entgegenhaltungen:
- EP-A- 0 963 082
- WO-A-98/26533

## Beschreibung

Die Erfindung betrifft ein Datenübertragungssystem für Luftfahrzeuge.

Zur Datenübertragung in Luftfahrzeugen sind verschiedene spezifische Datenbusse entwickelt worden. Die in jüngster Zeit stark gestiegenen Anforderungen im Hinblick auf das Datenvolumen haben dazu geführt, dass die Bandbreite im allgemeinen nicht mehr ausreicht bzw. eine Erhöhung der Bandbreite mit erheblichen Kostensteigerungen verbunden ist.

Es wurde deshalb versucht, auf kommerzielle Standards für die Datenübertragung auszuweichen. Diese Standards sind jedoch in den meisten Fällen deshalb nicht einsetzbar, weil sie die für Luftfahrzeuge geltenden hohen Anforderungen an die Zuverlässigkeit und operationelle Bestimmtheit der Datenübertragung (Determinismus) häufig nicht erfüllen können.

Aus der nachveröffentlichten EP 0 963 082 A2 ist ein System zur Verbesserung der Internet-Übertragungsqualität von Echtzeit-Datenpaketen bekannt, bei dem mehrere Kopien von Sprach-/Media-Datenrahmen redundant über verschiedene, in bestimmter Weise ausgewählte Wege durch das Internet zu einem (oder mehreren) Ziel-Computern geführt werden. Auf diese Weise kann an dem Ziel-Computer das gesendete Datenpaket aus den empfangenen Kopien der Datenrahmen auch dann relativ schnell und vollständig zusammengesetzt werden, wenn einzelne Kopien der Datenrahmen während der Übertragung verloren gehen oder verzögert eintreffen.

Der Erfindung liegt demgegenüber die Aufgabe zugrunde, ein Datenübertragungssystem zu schaffen, mit dem auf der Basis kommerzieller Datenbusse eine transparente und deterministische Datenübertragung mit einer für Luftfahrzeuge erforderlichen Zuverlässigkeit realisiert werden kann.

Gelöst wird diese Aufgabe gemäß Anspruch 1 mit einem Datenübertragungssystem der eingangs genannten Art, das sich dadurch auszeichnet, dass es durch ein Gesamtnetzwerk mit mindestens zwei Teilnetzwerken gebildet ist, von denen mindestens eines einen Sternverteiler aufweist, der jeweils mit mindestens einer Peripherieeinheit verbunden ist, wobei der mindestens eine Sternverteiler so geschaltet ist, dass jedes Teilnetzwerk für die damit verbundenen Peripherieeinheiten einen Kreuzverteiler darstellt, mit einem Datenprotokoll, das auf einer durch die IEEE festgelegten Rahmenstruktur basiert, die um ein erstes Feld zur Redundanzidentifikation erweitert ist, mit dem in einer empfangenden Peripherieeinheit eine Filterung von identischen, mehrfach empfangenen Rahmen durchgeführt wird, und / oder die um ein zweites Feld zur Identifikation einer Nachricht im Falle einer periodischen Datenübertragung erweitert ist, wobei die mindestens zwei Teilnetzwerke entweder vollständig separat aufgebaut oder auf einer höheren logischen Kommunikationsebene miteinander gekoppelt sind.

Ein besonderer Vorteil dieser Lösung besteht darin, dass ein sukzessiver Übergang (Migration) von den für Luftfahrzeuge entwickelten, spezifischen Datenbussen auf kommerzielle Datenbusse möglich ist und somit auch herkömmliche luftfahrtspezifische Datenbusse mit kommerziellen Datenbussen integriert werden können. Dies bedeutet, dass beide Datenbus-Arten in einem erfindungsgemäßen Datenübertragungssystem verwendet und miteinander kombiniert werden können, wodurch sich die Kosten für die Entwicklung und Zertifizierung eines solchen Systems wesentlich verringern lassen.

Die Unteransprüche haben vorteilhafte Weiterbildungen der Erfindung zum Inhalt.

Weitere Einzelheiten, Merkmale und Vorteile der Erfindung ergeben sich aus der folgenden Beschreibung einer bevorzugten Ausführungsform anhand der Zeichnung. Es zeigt:
- Fig. 1: eine Prinzipdarstellung des grundsätzlichen Aufbaus einer solchen Ausführungsform;
- Fig. 2: eine schematische Darstellung eines Teilnetzwerks gemäß Figur 1;
- Fig. 3: ein Funktionsschaltbild eines Teilnetzwerks;
- Fig. 4a, 4b: Rahmenstrukturen für verschiedene Datenformate;
- Fig. 5: den prinzipiellen Aufbau einer Kommunikationsfunktion der Peripherie des Übertragungssystems; und
- Fig. 6: den prinzipiellen Aufbau eines Sternverteilers.

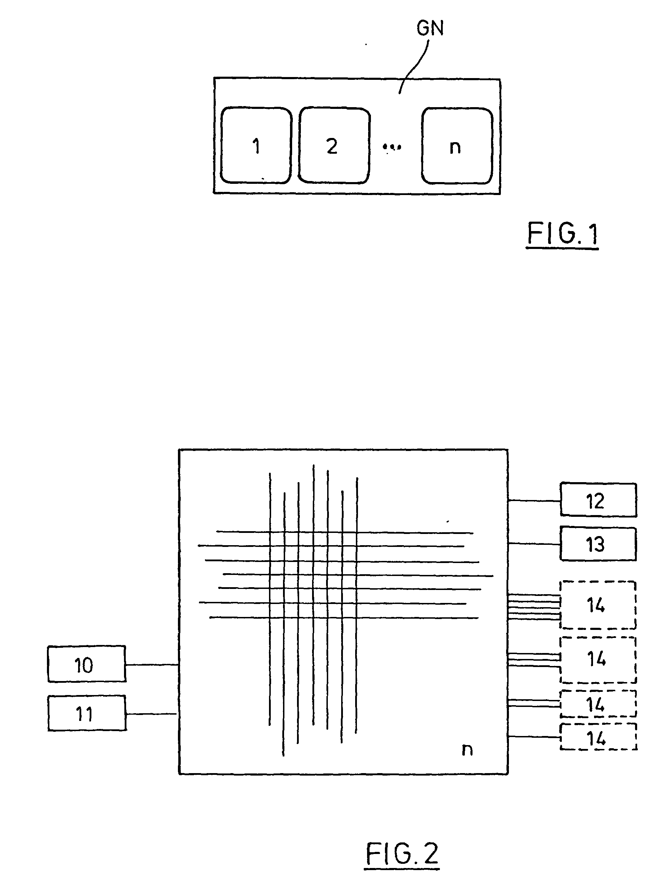

Figur 1 zeigt den grundsätzlichen Aufbau eines erfindungsgemäßen Datenübertragungssystems in Form eines Gesamt-Netzwerkes GN. Dieses setzt sich aus einem oder mehreren Teil-Netzwerken 1, 2, ..n zusammen, die jeweils entsprechend der Ebene 2 (Datalink Layer) des OSI (Open Systems Interconnection)-Referenzmodells nach ISO 7498 implementiert sind. Diese Teil-Netzwerke 1, 2, ..n sind entweder vollständig separat aufgebaut oder auf einer höheren logischen Kommunikationsebene (zum Beispiel der OSI-Ebene 3) miteinander gekoppelt. Die physikalische Schicht (OSI-Ebene 1) sowie die Grundsätze der Zugriffssteuerung auf das Medium (Ebene 2) basieren auf dem internationalen Standard IEEE 802.3, 1998, der auch als "Ethernet" allgemein bekannt ist.

Durch seine zentrale Lage kann das Datenübertragungssystem gleichzeitig für ein Netzwerk-Management von angeschlossenen Datenbussen verwendet werden. Basis hierfür sind entweder die durch Arinc/AEEC festgelegten, oder aber andere, auf die beschriebene Gruppe von Datenbussen anwendbare, bekannte Verfahren und Protokolle. Zusätzlich ist mit Hilfe des Datenübertragungssystems der Aufbau von Verbindungen auf der Ebene 3 des OSI-Referenzmodells (Networking Layer) möglich.

Figur 2 zeigt den prinzipiellen Aufbau eines Teilnetzwerkes n mit einer Mehrzahl von angeschlossenen Peripheriegeräte und/oder -einheiten 10, 11, 12, 13, sowie anderer Datenbussysteme 14 wie z.B. Arinc 429, Arinc 629, Arinc 636. Aus der Sicht der Peripheriegeräte und -einheiten 10 bis 13 (Rechner, Regler, etc.) wirkt das Teilnetzwerk n wie ein Kreuzverteiler: jede Peripherieeinheit kann direkt mit jeder anderen Peripherieeinheit Daten austauschen. Hierbei arbeitet sowohl jede Peripherieeinheit als auch das Teilnetzwerk als Ganzes sowohl als Sender als auch als Empfänger. Die Adressierung bedient sich einer Identifikation des Empfängers bzw. Senders und erlaubt daher jegliche Sender-zu-Empfänger (Unicast, Peer-to-Peer), Sender-zu-Empfängergruppen (Multicast) oder Sender-zu-Allen (Broadcast) Kommunikation. Im Gegensatz zu den luftfahrtspezifischen Datenbussen (Arinc 429: < 20 Peripheriegeräte, Arinc 629: < 120 Peripheriegeräte), die grundsätzlich an alle Teilnehmer des jeweiligen physikalischen Busses senden und den Inhalt der gesendeten Nachricht identifizieren, ist die Anzahl der an das Teilnetzwerk n anzuschließenden Peripherieeinheiten grundsätzlich nur durch die Anzahl der zur Verfügung stehenden Adressen (>7*10¹³) begrenzt. Zusätzlich werden diese spezifischen Datenbusse über eine Übertragungsfunktion (Gateway) angekoppelt.

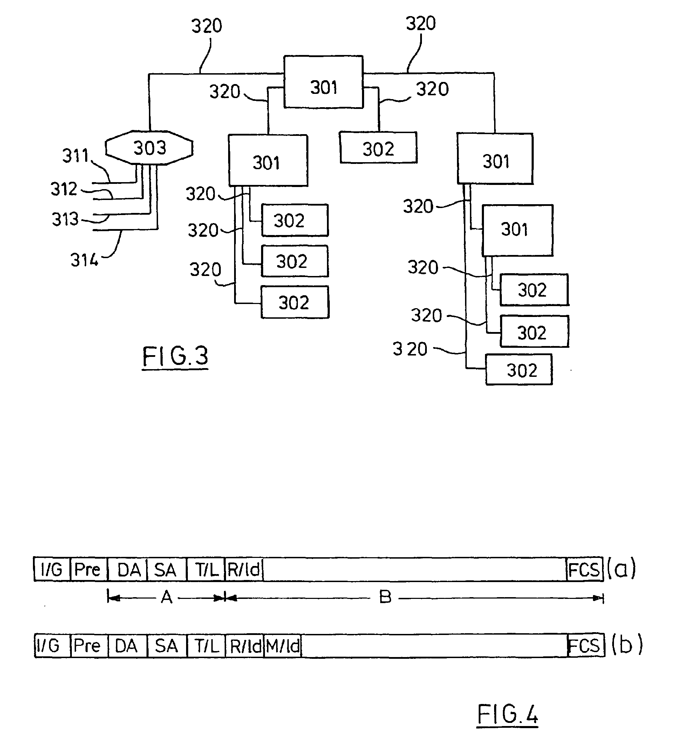

Figur 3 beschreibt beispielhaft die Struktur eines Teilnetzwerkes. Es umfaßt vier im wesentlichen identische Sternverteiler 301, an die eine oder mehrere Peripherieeinheiten oder -geräte 302 über jeweils eine Datenverbindung 320 angeschlossen sind. Ausgehend von einem der Sternverteiler 301 mit mehreren Anschlüssen wird dabei eine Struktur aufgebaut, die an den jeweiligen operationellen Anforderungen des jeweiligen Luftfahrzeuges ausgerichtet ist. Hierzu kann z.B. auch ein Sternverteiler 301 über Datenverbindungen 320 mit anderen Sternverteilern 301 gekoppelt sein.

Auch können Konverter 303 über Datenverbindungen 320 angeschaltet werden, die eine Verbindung zu anderen Datenbussen oder Datenübertragungssystemen - luftfahrtspezifisch sind beispielhaft die Bussysteme 311 (Arinc 429), 312 (Arinc 629), 313 (Arinc 636) sowie ein kommerzielles Bussystem 314 angegeben - herstellen.

In der Hauptsache aber werden über die Datenverbindungen 320 Peripheriegeräte 302 (Rechner, Regler, etc.) angeschlossen. Es ist davon auszugehen, daß die Peripheriegeräte 302 sehr unterschiedliche Funktionen ausführen und daher verschieden voneinander konstruiert sein können. Sie alle verbindet jedoch die gleiche Art der Datenübertragung, und zwar sowohl in ihrer Eigenschaft als Sender, als auch als Empfänger. Gleiches gilt für die Sternverteiler 301. Sie können sich in Abhängigkeit von den Anforderungen an die Anzahl der anzuschließenden Datenverbindungen 320, die Leistung sowie die Installation konstruktionsmäßig voneinander unterscheiden. Ihnen gemeinsam ist jedoch die identische Funktionsweise, die luftfahrtspezifischen Anforderungen (Funktionssicherheit, Bestimmtheit des Betriebes, Art der Datenübertragung, etc.) angepaßt ist.

Die Figuren 4a, 4b zeigen die durch den internationalen Standard IEEE 802.3 festgelegte Rahmenstruktur der Datenpakete sowie Beispiele für deren erfindungsgemäße Erweiterungen. Das "Interframe Gap" (I/G) sowie die "Preamble" (Pre) sind Felder, die durch die physikalischen Eigenheiten des Datenübertragungssystems gegeben sind und aus Kompatibilitätsgründen erhalten werden müssen. Daran schließt sich ein Rahmenkopf A mit den Feldern "Destination Address" (DA), "Source Address" (SA) und "Type/Length" (T/L) an die aus den gleichen Gründen erhalten bleiben. Sie transportieren die zur Datenübertragungsschicht (Ebene 2 des OSI-Modells) gehörenden Steuerinformationen. In diesem Übertragungssystem enthalten alle Felder aus Gründen des nahtlosen Zusammenspiels mit kommerziellen Komponenten (Interoperabilität) und des sukzessiven Übergangs (Migration) mit dem Standard vollständig vereinbarte Werte. Im Gegensatz zu den im kommerziellen Bereich üblichen Implementationen werden an die Anforderungen angepaßte und durch die Luftfahrtindustrie verwaltete Werte verwendet. Beispielsweise werden die Sender- und Empfangsadressen aus dem Bereich der sogenannten "lokal verwalteten" Adressen entnommen, die sich leicht prüfbar von den kommerziellen ("global verwalteten") Adressen unterscheiden und den Einbau von Sicherheitsbarrieren erlauben. Auch der Inhalt des T/L- ("Type/Length") Feldes unterliegt einer Standardisierung. Auch diese erlaubt jedoch eine lokale Verwaltung von Werten, die gleichfalls für die Identifikation und Auswahl spezifisch angepaßter Protokolle herangezogen werden kann.

Jedwede Erweiterung des Standards hat auf vereinbarte weise zu erfolgen, um die ziele der "Interoperabilität" und "Migration" erhalten zu können. Aus diesem Grund folgt gemäß Figur 4a erfindungegemäß dem T/L-Feld in dem Rahmenkopf ("Frame Header") A ein Feld R/Id ("Redundancy Identification") zur Identifikation redundanter Rahmen in dem Rahmenkörper ("Frame Body") B. Wie nachfolgend beschrieben werden wird, wird der Inhalt dieses Feldes auf der Empfängerseite zur Filterung von identischen, mehrfach empfangenen Rahmen verwendet.

Für den periodischen Fall ist eine Netzwerk- (Ebene 3) oder Transportschicht (Ebene 4) nicht zwangsweise notwendig. Aus diesem Grund ist in dem Beispiel in Figur 4b ein Feld M/Id ("Message Identification") für die Identifikation der Nachricht unmittelbar im Anschluß an das Feld R/Id zur Redundanzidentifikation vorgesehen. Wird aber eine Netzwerk- und/oder Transportschicht notwendig, wird dieses Feld hinter diejenigen für die Protokollsteuerung verschoben. Am Prinzip dieser erfindungsgemäßen Erweiterung ändert sich dadurch jedoch nichts.

Auf die Felder für die Steuerinformationen der verschiedenen Protokollschichten folgt dann im Rahmenkörper gemäß der Figuren 4a und 4b der Nutzdatenanteil (Data). Der Rahmenkörper kann technologiebedingt bis zu 1500 Octets (Byte) groß werden. Da in diesem Datenübertragungssystem besonderer Wert auf kurze Verzögerungszeiten gelegt wird, werden Rahmengrößen von etwa 256 Octets angestrebt. Die genaue zu implementierende Größe hängt jedoch zum Beispiel von der aktuell vorgesehenen Anzahl der Ein-/Ausgänge der Sternverteiler, der geforderten maximalen Verzögerungszeit für eine Übertragung von Peripherie zu Peripherie, der Tolerierbarkeit von Verzögerungen sowie dem tatsächlichen Datenverkehrsaufkommen ab.

Den Abschluß des Rahmens bildet ein Feld FCS ("Frame Check Sequence"), das Informationen zur Integritätsprüfung beinhaltet. Es ist dazu bestimmt, dem Empfänger die Gewißheit zu geben, ob der Rahmen den Transport durch das Datenübertragungssystem ohne Beschädigungen überstanden hat. Gemeinsam mit dem verwendeten Algorithmus zur Erzeugung der 32 Bit großen Information verbessert dieses die Erkennbarkeit von Übertragungsfehlern um den Faktor 10⁷. Im weiteren Verlauf wird auf die Verwendung dieser Information genauer eingegangen werden.

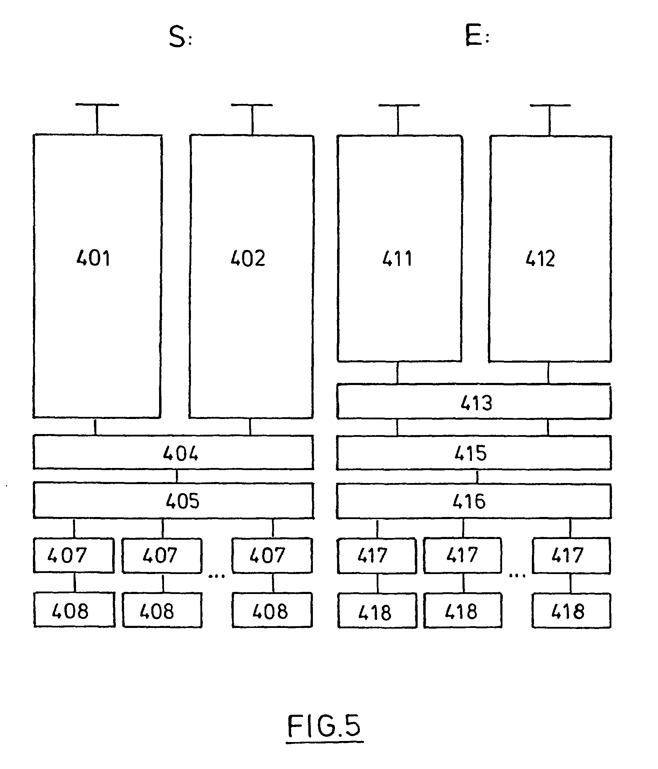

Figur 5 beschreibt den Aufbau der in den Peripherieeinheiten 302 implementierten Kommunikationsfunktionen, wobei zwischen einer Sendeseite S und einer Empfangsseite E zu unterscheiden ist.

Hierzu gehören Dienste 401 bis 408, die Sendefunktionen darstellen, sowie Dienste 411 bis 418, die Empfangsfunktionen bereitstellen. Während die Dienste (Services) 402, 407, 408, 412, 413, 417 und 418 denen entsprechen, die im zugrunde liegenden "Ethernet" Standard definiert worden sind, sind die Dienste 401, 404, 405, 411, 415 bzw. 416 für die Nutzung dieses Datenübertragungssystems für sicherheitskritische Anwendungen erfoderlich. Für weniger kritische Anwendungen können einzelne Dienste entfallen. Allerdings sind jeweils Dienste mit gleichen Endziffern zwingend paarweise (401 & 411, 405 & 415) zu implementieren.

Im Sinne der Erfindung sind die Dienste und Komponenten bedeutsam, die weder kommerziell noch in der Luftfahrt bekannt sind. Die folgenden Abschnitte gehen detailliert auf deren Funktion ein.

Der IEEE Standard 802.3 definiert nur aperiodische Datenübertragungen, wie sie für den kommerziellen Betrieb von Bedeutung sind. In der Luftfahrt dagegen iiberwiegen Steuerungsaufgaben, deren Datenübertragung häufig einen periodischen Charakter hat. Die periodischen Dienste 401 und 411 stellen in dem beschriebenen Datenübertragungssystem die notwendigen Funktionen bereit.

Der periodische Sendedienst 401 stellt die Funktion bereit, in vorgegebenen Intervallen Nachrichten zusammenzustellen, zu identifizieren, zu adressieren und in ein sendefähiges Format zu kodieren.

Applikationen (z.B. Regler) teilen nun entweder statisch zum Zeitpunkt der Systemkonfiguration oder dynamisch zur Laufzeit dem Dienst 401 mit, welche Nachrichten übertragen werden sollen. Neben der Identifikation der Nachricht gehört zu den übergebenen Informationen z.B. das erwünschte Intervall, der Inhalt sowie der oder die Empfänger. Der Sendedienst 401 bestimmt daraus das erforderliche Übertragungsbudget und gleicht es mit dem zwingend zum Zeitpunkt der Systemkonfiguration der Applikation zugeteilten Budget ab. Aus allen einzelnen Übertragungsaufträgen erstellt der Dienst ein Übertragungsprofil, welchem ebenfalls ein Budget - nun für alle Applikationen eines Peripheriegerätes 302 gemeinsam - zugeteilt worden ist. Je nach Implementation findet dieser Prozess entweder zum Zeitpunkt der Systemkonfiguration statt (statische Anfrage, static contract) oder aber im operationellen Betrieb nach dem Start des Applikationsprogrammes (dynamische Anfrage, dynamic contract). In jedem Fall hängt die für den sicheren Betrieb eines Luftfahrzeuges notwendige operationelle Bestimmtheit (Determinismus) auch von der Einhaltung der vorgegebenen Budgets ab. Diese sind wihrend des Designprozesses zu ermitteln und den Betriebsprogrammen zum Zeitpunkt der Systemkonfiguration entweder statisch (Bestandteil des Programms) oder aber dynamisch (z.B. ladbare Tabelle) zur Verfügung zu stellen.

Die zu verwendenden Sendeprotokolle (und damit auch jene, die in dem periodischen Empfangsdient 411 zu verwenden sind) werden nach der erforderlichen Funktionalität ausgewählt. Diese können entweder aus dem Fundus der internationalen Standards (ISO, ITU, IEEE, IETF, SAE, Arinc, etc.) stammen oder aber proprietär (also spezifisch) sein. Wegen der Abhängigkeit von aktuellen Applikationen findet hier keine Festlegung statt.

Der Prioritäts-Dienst 404 optimiert das Übertragungsprofil auf der Sendeseite S und hat in der Folge keinen Einfluß auf die Durchleitung der gesendeten Rahmen innerhalb des Übertragungssystems. Er sorgt dafür, daß im Grundsatz Übertragungsanfragen nach Wichtigkeit (Priorität) an den nachfolgenden Dienst weitergeleitet werden. Einfluß auf die Wichtigkeit haben die Übertragungscharakteristik (periodisch/aperiodisch), das Zeitverhalten (geringe/hohe Intervallrate), sowie der Protokolltyp (z.B. TFTP, SNMP). Wie diese Information an den Dienst gegeben wird, ist abhängig von der Implementation und daher hier nicht relevant. Gleichzeitig sorgt der Dienst dafür, daß ein Mindestabstand zwischen zwei Senderahmen eingehalten wird. Dieser Parameter wird zum Zeitpunkt der Systemkonfiguration als Folge des Designprozesses des Übertragungssystems festgelegt und dem Dienst in gleicher Weise mitgeteilt wie die anderen Budgetwerte. Der Prioritäts-Dienst 404 kommuniziert nicht mit einem Gegenstück auf der Empfangsseite E. Sein Einsatz ist daher optional nur von den Übertragungsanforderungen der den Dienst benutzenden Applikationen abhängig und spätestens zum Zeitpunkt der Konfiguration des Peripheriegerätes festgelegt.

Die Aufgabe des Redundanz-Dienstes 405 ist die transparente Übertragung der Senderahmen über parallele Teilnetzwerke. Hierzu versieht der Dienst jeden übergebenen Senderahmen mit einer eindeutigen Identifikation. Diese stellt sicher, daß der Empfänger identische Rahmen innerhalb der maximalen Variation ihrer Laufzeiten durch die Teilnetzwerke des Datenübertragungssystems eindeutig erkennen kann. Im Grundsatz kann eine Auswahl aller zur Verfügung stehenden Teilnetzwerke für jede einzelne Übertragung ausgewählt werden. Hierzu wird dem Dienst eine entsprechende Steuerinformation durch die aufrufende Applikation parallel zum zu übertragenden Senderrahmen zur Verfügung gestellt. Im Anschluß an die Redundanz-Identifikation werden identische Kopien des Senderahmens an alle ausgewählten Medien-Zugriffsdienste (Media Access Control, MAC) 407 weitergeleitet.

Wegen der Bedeutung für die Funktion des erfindungsgemäßen Datenübertragungssystems sollen im folgenden die Medien-Zugriffsdienste 407/417 und anschließend die Dienste 408/418 der physikalischen Schicht (PHY) ergänzend erläutert werden.

Der MAC Dienst 407 in Senderichtung und 417 in Empfangsrichtung verbindet alle Aufgaben, die für den logischen Zugang zu einem (Teil-)Netzwerk erforderlich sind. In Senderichtung bedeutet dies: die Formatierung des Senderahmens in eine mediumgerechte Form (hier: IEEE 802.3 Frame); die Erzeugung von Integritätsinformation; die Steuerung des Zuganges zum Medium; die Übergabe der Sendedaten in Octets (Bytes) an die physikalische Schicht 408 (Schicht 1). In Empfangsrichtung bedeutet dies: die Entgegennahme von Octets von der physikalischen Schicht 418; die Prüfung der Integritätsinformation; die Übergabe der Empfangsdaten an den Schutzdienst 416.

Parallel zu den zu übertragenden Daten erhält der MAC Dienst 407 Informationen über den oder die Empfänger sowie den Typ des Protokolls der beauftragenden Schicht. Mit der Kenntnis der eigenen Adresse erzeugt der Dienst 407 einen IEEE 802.3 Rahmen (Frame). Auf diesen wird die Integritätsinformation mit Hilfe eines Algorithmus zur zyklischen Redundanzprüfung ("Cyclic Redundancy Check") erzeugt und dessen Ergebnis an den Rahmen angehängt. Zu diesem Zeitpunkt ist dieser gesichert und sendefertig.

Das erfindungsgemäße Datenübertragungssystem ist nun derartig aufgebaut, daß weder die IEEE 802.3 -inherente Zugriffssteuerung ("Carrier Sense Multiple Access with Collision Detection", CSMA/CD; etwa: "Träger-Ermittlung für Mehrfach-Zugriff mit Kollisionserkennung") noch der Vergleich der Sende- mit den Empfangsdaten zur Kollisionserkennung notwendig ist. Dazu werden die Dienste 407 und 417 in einen entkoppelten Modus versetzt, in dem sie gleichzeitig senden und empfangen können.

Die Dienste 408 bzw. 418 der physikalischen Schicht sind definitionsgemäß ständig voneinander entkoppelt, so daß dort kein Vergleich zwischen übertragener und empfangener Information stattfinden kann. Zwingende Voraussetzung für den beabsichtigten Betrieb ist also eine Verkabelung, die jede Peripherieeinheit ausschließlich entweder direkt mit genau einer anderen Peripherieeinheit oder aber genau mit einem Sternverteiler verbindet (siehe auch Figur 3, Verbindungen 320). Da nun - je nach Wahl der physikalischen Ebene - nicht mehr durch äußere Bedingungen der Status der Sende- und Empfangsleitung ermittelt werden kann, ist die Übertragung mindestens zweier zusätzlicher Statusignale durch die Dienste 408 und 418 notwendig. Diese Signale schließen sich gegenseitig aus und werden in Abhängigkeit von der Tatsache des eigenen Empfangs zulässiger Signale (Statussignale oder Rahmen) der Gegenseite ausgewählt. Wird beispielsweise ein Statussignal der Gegenseite 418 empfangen, sendet der Dienst 408 ein Signal S1, ansonsten ein Signal S2. Das Verfahren ermöglicht beiden Diensten gleichermaßen, den Zustand der Verbindung zwischen ihnen eindeutig und zweifelsfrei festzustellen.

Der Dienst 408 enthält zusätzlich eine Komponente, die fehlerhaftes, dauerndes Senden von ungültigen Signalen (z.B. zu lange Rahmen, zufällige Folge von ungütigen Bits) feststellt und nach einer im IFFF 802.3 Standard festgelegten Zeit unterbindet. Unabhängig davon verwirft der Dienst 418 alle ungültigen Bitfolgen, während der Dienst 417 alle ungültigen Rahmen verwirft.

Die physikalische Ebene enhält zum Schutz gegen elektrische Störungen sowohl auf der Senderseite 408 als auch auf der Empfangsseite 418 Signal-Übertrager, deren Charakteristika den in den Internationalen Standards IEEE 802.3, RTCA DO-160D und Arinc 646 spezifizierten Werten entsprechen.

Um den Einfluß eines weiteren möglichen Fehlerfalles auf einen beliebigen Empfänger (Peripherie, Sternverteiler oder Konverter) zu minimieren, wird dort der zusätzliche Schutzdienst 416 installiert. Ein solcher Fehler manifestiert sich in Form einer Folge identischer und gültiger Rahmen extrem kurzer Intervallrate, die durch ein Teilnetzwerk empfangen werden. Darauf reagiert der Dienst je nach operationeller Notwendigkeit entweder mit einem vollständigen Abschalten des betroffenen MAC Dienstes 417 oder aber mit der Anwendung eines Empfangsbudgets. In letzterem Fall wird die Anzahl der überzählig empfangenen Rahmen auf einen maximal zu erwartenden Wert reduziert, welcher zum Zeitpunkt der Systemkonfiguration als Folge des Designprozesses des Übertragungssystems festgelegt und dem Dienst in gleicher Weise mitgeteilt wird, wie die anderen Budgetwerte.

Der Dienst 415 prüft auf Mehrfachempfang von Rahmen, die entweder über unterschiedliche Teilnetzwerke oder aber auf Grund von fehlerhaften Sendern eintreffen können. Grundlage der Prüfung ist die durch den senderseitigen Dienst 405 eingefügte eindeutige Redundanz-Identifikation. Erweiternd kann die durch den senderseitigen Dienst 407 eingefügte Integritätsinformation ("Cyclic Redundancy Check") als zusätzliche Vergleichsinformation herangezogen werden. Beim Empfang eines Rahmes prüft der Dienst 415, ob bereits ein identischer und vor allem gültiger Rahmen eingetroffen ist. Sollte dies der Fall sein, wird der aktuelle Rahmen verworfen. Ist dies nicht der Fall, werden Vergleichsinformationen (z.B. Redundanz-Identifikationen, Absenderadresse, CRC, etc.) in einer Tabette abgelegt, und der Rahmen an den Dienst 413 weitergegeben. Da derartige Tabelleneinträge veralten, werden sie nach einer durch die Verkehrscharakteristik gegebenen zeit für ungültig erklärt und für weitere Prüfungen verwendet. Der Eintrag wird gleichzeitig für neue Einträge freigegeben. Da die übergeordneten Protokollschichten nun keine Information über die redundante Verfügbarkeit von Rahmen haben, beinhaltet der Dienst 413 zusätzliche Netzwerkverwaltungs-Funktionen ("Network Management"). Diese beziehen sich auf das Erkennen und Melden von operationellen Anomalien (z.B. dauernder Verlust eines Teilnetzwerkes oder Absenders auf einem Teilnetzwerk, Mehrfachempfang pro Teilnetzwerk, etc.) sowie das Anfertigen von relevanten Statistiken.

Der Dienst 413 ist implizit in allen Protokollstandards enhalten und findet immer dann Verwendung, wenn die nächsthöhere Protokollschicht mehrere Optionen bereitstellt. Im Fall von Dienst 413 wird der Inhalt des Rahmenfeldes "Type/Length" (IEEE 802.3) ausgewertet und daraufhin der Rahmen an das dazugehörige Protokollelement der nächsthöheren Protokollschicht weitergeben.

Der periodische Empfangsdienst 411 stellt die Funktion bereit, Parameter, die periodisch empfangen werden, den anfordernden Applikationen in verabredungsgemäßer (contract) Forrn bereitzustellen. Diese teilen entweder statisch zum Zeitpunkt der Systemkonfiguration oder dynamisch zur Laufzeit dem Dienst mit, welche Parameter übergeben werden sollen. Die nähere Definition eines Parameters enthält beispielsweise u.a. seine Identifikation, den Absender, die transportierende Nachricht, das erwartete Format sowie den Übergabeort.

In bestimmten Fällen ist es notwendig, eine Angabe über die "Frische" des übergebenen Parameters zu bekommen. Darunter wird eine Angabe verstanden, die es der Applikation ermöglicht festzustellen, ob innerhalb des von ihr erwarteten Intervalls ein erneuter, gültiger Empfang des Parameters stattgefunden hat. Im einfachsten Fall ist dies ein Status (flag), welches bei der Übergabe des Parameters durch den periodischen Empfangsprozess "gesetzt" und beim Lesen durch die Applikation "zurückgesetzt" wird. Eine Zeitmarke erfüllt den gleichen Zweck, stellt aber eine wesentlich genauere Möglichkeit zur Verfügung, den Empfangszeitpunkt festzustellen. Wird diese Zeitmarke von dem Absender bereits bei der Erzeugung des Parameters erstellt, ist eine transportunabhängige Prüfung der Reihenfolge und zeitlichen Gültigkeit für die eigenen Berechnungen möglich. Die ultimative Prüfung ermöglicht eine Synchronisation aller Zeitmarkengeneratoren über eine zentrale Uhr (z.B. GNSS und Hilfssysteme). Dies erlaubt die Korrelation aller empfangenen Bord- und Bodenparameter mit den eigenen Werten und Berechnungen.

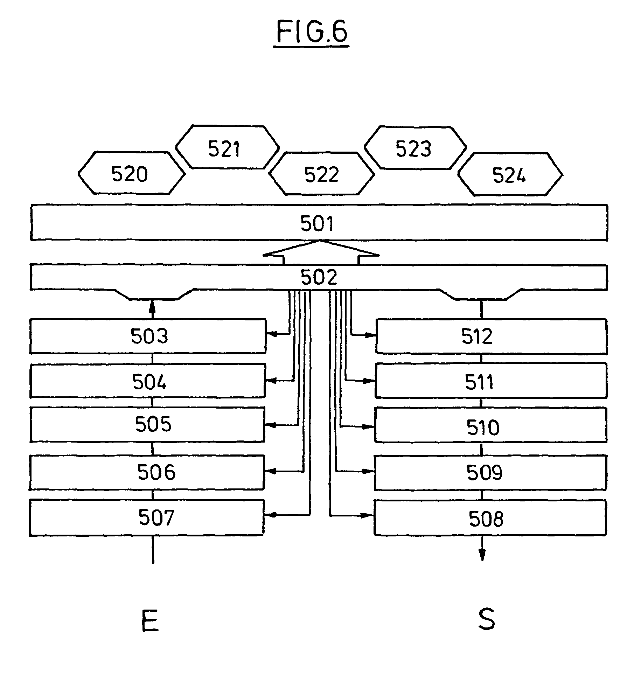

Periphere Geräte 302, die die oben beschriebenen Datenübertragungsfunktionen beinhalten, kommunizieren entweder direkt oder über gegebenenfalls miteinander verbundene Sternverteiler 301 miteinander. Figur 6 beschreibt die Funktionen eines erfindungsgemäßen Sternverteilers 301.

Im Folgenden werden die Dienste beschrieben, die ein Rahmen auf dem Weg durch den Sternverteiler passiert. Anschließend wird auf die Funktionen eingegangen, die implizit durch Entscheidungen während des Designprozesses in der gewählten Implementation ihren Niederschlag finden.

Die Dienste 507 und 508 entsprechen vollständig denjenigen eines peripheren Gerätes 408 und 418. Es soll daher hier nicht weiter darauf eingegangen werden.

Auch der Dienst 506 entspricht demjenigen eines peripheren Gerätes 407. Hier ist speziell die Anforderung zu erwähnen, die Integritätsinformation (Inhalt des Rahmenfeldes "Frame Check Sequence") nicht nur zu prüfen, sondern den Wert zusammen mit dem Datenanteil des Rahmens an den oder die Ausgänge weiterzuleiten.

Der Dienst 505 prüft, ob der Rahmen von dem oder den am entsprechenden Eingang erwarteten Geräten stammen. Hierzu wird die im Rahmenfeld "Source Address" enthaltene Absenderadresse mit den in einer Tabelle gespeicherten, für diesen Eingang zulässigen Sendern verglichen. Stammt also der Rahmen von einem zulässigen Sender, so wird der Rahmen an den nächsten Dienst weitergereicht. Stammt der Rahmen aber von einem unzulässigen Sender, wird der Rahmen verworfen und der "Network Management" Dienst 501 darüber verständigt.

Der Dienst 504 prüft, ob der Rahmen an einen oder mehrere Ausgänge weitergeleitet werden kann. Hierzu wird die im Rahmenfeld "Destination Address" enthaltene Empfängeradresse mit den in einer Tabelle gespeicherten zulässigen Empfängern verglichen. Findet der Dienst einen oder mehrere Empfänger, kann der Rahmen weitergeleitet werden. Dazu versieht der Dienst den Rahmen mit einer intern genutzen Zusatzinformation über die zu verwendenden Ausgänge des Sternverteilers, bevor dieser an den "Forwarding Budget Compliance Check" Dienst 503 weitergeleitet wird.

Der Dienst 503 prüft, ob sich der weiterzuleitende Rahmen noch innerhalb des hierfür vorgesehenen Budgets befindet. Dieses wird definiert durch das Zusammenwirken von Parametern die geeignet sind, das zeitliche Verhalten von Rahmen sowie das der Rahmenziele zu beschreiben. Beispielhaft sind zu nennen: der minimale zeitliche Abstand zweier aufeinanderfolgender Rahmen, die Anzahl der Rahmen, die in diesem minimalen zeitlichen Abstand aufeinander folgen können, die Länge der Rahmen, die Variabilität der zeitlichen Abfolge der Rahmen, die Kosten für die Weiterleitung eines Rahmens an einen oder mehrere Ausgänge, der zeitabhängig gewährte Kredit für die Weiterleitung von Rahmen, der maximal gewährte Kredit, und so weiter. Die Prüfung findet auf Basis der im Rahmen selbst enthaltenen Zieladresse (Destination Address, DA) statt und vergleicht das für diese Adresse aktuelle Budget mit dem für eine Weiterleitung notwendigen Budget. Im Falle ausreichenden Budgets wird die Transaktion durchgeführt, ansonsten der Rahmen verworfen.

Der Dienst 502 verwendet die bereits geprüfte Zieladresse und sorgt dafür, das der Rahmen an den oder die entsprechenden Ausgänge weitergeleitet wird. Die hierzu existierende Vielzahl von Implementationsmöglichkeiten, die dafür Verwendung finden können, sind hier nicht relevant und abhängig von der geforderten Optimierung. Was die Möglichkeiten geeigneter Implementation angeht, sei auf eine wesentliche Einschränkung verwiesen: Die Zerlegung von Rahmen in Fragmente (z.B. "Zellen") zum Zwecke der feineren Belegung der internen Übertragungsstruktur (z.B. Datenbus) ist in der Lage die Reihenfolge der erfolgreich zum Ausgang übertragenen Rahmen zu verändern. Da dies die Vorhersagbarkeit (Determinismus) der Auslieferung verhindert, sind alle Implementationen, die dieses Verfahren verwenden, nicht mit den Zielen eines erfindungsgemäßen Datenübertragungssystemes vereinbar.

Der Dienst 512 ist Teil der Funktionalität eines Ausganges. Er wird verwendet um den Fluß der Rahmen zu steuern. Zwei Unterfunktionen - Speichermanagement und Latenzbeeinflussung - stehen zur Verfügung, wobei das Speichermanagement in diesem Zusammenhang nicht relevant weil implementationsspezifisch ist. Die Unterfunktion Latenzsteuerung sorgt dafür, daß nur soviel Platz für Rahmen zugewiesen wird, daß eine maximale Verweilzeit von Rahmen im Switch garantiert werden kann. Rahmen, die diese Zeit nicht einhalten können werden verworfen, um Rahmen, die diese Zeit einhalten können, nicht zu beeinflussen. Die notwendige Parametrierung muß Informationen enthalten, die dazu geeignet sind die maximale Verweilzeit zu garantieren. Die Definition für die Ermittlung der internen Verweildauer sei die Zeit, die zwischen dem Empfang des ersten Bits des ersten Octets im Eingang durch den Dienst 507 und dem Aussenden des ersten Bits eben dieses Octets im Ausgang durch den Dienst 508 gemessen werden kann. Im Fall interner Zeitbetrachtungen sei (das erste Bit) dieses Octet ebenfalls heranzuziehen.

Als Beispiel für die in diesem Zusammenhang zu machenden Überlegungen ist folgende Ausführung zu verstehen, da die interne Latenz im Wesentlichen von der Wartezeit im Ausgang abhängt, ist die Größe des dort zur Verfügung gestellten Speichers ein wichtiger Parameter. Weiterhin ist die Geschwindigkeit der Verkehrsfilterung im Eingang (Dienste 503 - 505) ein zu berücksichtigender Wert. Beide Parameter gemeinsam erlauben bereits eine relativ genaue Steuerung der internen Verweildauer.

Der Dienst 513 ist ebenfalls Teil der Funktionalität eines Ausganges. Er ist optional und wird verwendet um den prioritätsgesteuerten Fluß der Rahmen zu erlauben. Es ist unter Umständen wünschenswert, Rahmen höherer Wichtigkeit getrennt und bevorzugt von Rahmen geringerer Wichtigkeit auszusenden. Unabhängig von der Anzahl der Stufen der Wichtigkeit und der internen Implementation dieser Fähigkeit sind zwei Verfahren realisierbar: die explizite sowie die implizite Angabe der Wichtigkeit. Bei der expliziten Angabe wird die Information über die Wichtigkeit des Rahmens innerhalb des Rahmens selbst untergebracht. Hierzu sind wiederum entweder dem IEEE 802.1 Standard konforme oder aber propietäre Verfahren für eine erfindungsgemäße Implementation anwendbar. Auf der anderen Seite sind bei der impliziten Angabe der Wichtigkeit die Informationen den bereits im Rahmen standardmäßig innewohnenden Angaben zu entnehmen. Die Angabe findet nun ebenfalls wie beim Dienst 503 auf Basis der im Rahmen selbst enthaltenen Zieladresse (Destination Address, DA) statt. Alternativ und erfindungsgemäß ist die Zuordnung auch auf Basis der Sendeadresse (SA) oder des Typs oder der Länge (implizit oder explizit) sinnvoll. Abhängig vom Entscheidungskriterium kann der Rahmen bevorzugt behandelt werden. Warten bereits Rahmen derselben Wichtigkeit, werden diese zunächst gesendet.

Eine mögliche Erweiterung des Dienstes 513 erlaubt es, Rahmen geringerer Wichtigkeit nach den Regeln von Rahmen höherer Wichtigkeit zu behandeln. Folgendes Szenario beschreibt beispielhaft, unter welchen Umständen diese geschehen kann: Es warte ein Rahmen geringerer Wichtigkeit auf Übertragung. Wegen der ununterbrochenen Behandlung entweder von Rahmen höherer Wichtigkeit oder bereits länger wartenden Rahmen gleicher Wichtigkeit wird die Behandlung des beispielhaft betrachteten Rahmens bis zu einer gewissen Wartezeit nicht in Angriff genommen. Für diesen Rahmen sei eine maximale Wartezeit innerhalb der aktuellen Wichtigkeit definiert, weswegen dieser Rahmen nun intern einer höheren Wichtigkeit zugeordnet wird. Warten bereits Rahmen dieser Wichtigkeit, werden diese zunächst gesendet. Abhängig von der Anzahl der Stufen der Wichtigkeit kann dieses Szenario, unter Umständen bis zum Erreichen einer vordefinierten maximalen Wichtigkeit, mehrmals stattfinden.

Analog zu dem im Dienst 401 realisierten Übertragungsbudget kann auch auf der Sendeseite des Sternverteilers eine Funktion 510 integriert werden, die die Einhaltung eines bestimmten Sendebudgets sicherstellt. Es sind daher identische Parameter mit gegebenenfalls an die Lage im Netzwerk angepassten Werten zu verwenden. Speziell ist die Sicherstellung eines Mindestabstandes zwischen aufeinanderfolgenden Übertragungen von Interesse. Da dieser Dienst zwar die Vorhersagbarkeit des genutzen Budgets verbessert, die Implementation jedoch als komplex angesehen wird, ist dieser Dienst optional.

Der Dienst 501 entspricht im Wesentlichen dem eines vom Standard IEEE 802.1 beschriebenen Dienstes. Abweichend davon hat der Dienst die Aufgabe, Daten über die Leistung und Fehler des Sternverteilers und die an ihn angeschlossenen Netzwerksegmente zu sammeln, auszuwerten und an etwaige Verbraucher (Netzwerk Manager) zur Verfügung zu stellen. Zu diesem Zweck ist der lesenden und schreibenden Zugang zu den durch die erfindungsgemäßen Funktionen zur bereitgestellten Daten zu gewährleisten. Für den lesenden Zugang beispielhaft zu nennen sind: Anzahl, Herkunft, Ziel & Zeitpunkt (z.B. "flight leg", sprich: Flugabschnitt) der verworfen Rahmen wegen überschrittenen Empfangsbudgets, interner Latenzzeit, Länge, etc. Für den schreibenden Zugang beispielhaft zu nennen sind: Rücksetzten von Zählern und Zeitgebern; Auswahl von Modi der Überwachung, wie sequentielles Zählen (z.B. Anzahl von Fehlern seit Start), Zählen mit periodischem Rücksetzen (z.B. Fehler pro Sekunde); Setzen von Schwellwerten für Alarme; etc. Weiterhin hat er luftfahrtspezifische Funktionen auszuführen (Stichwort: Built-In Test Equipment, BITE), zu überwachen (Beispiel: Power-On Self-Test, POST) und die Schnittstelle nach außen (z.B. On-Board Maintenance System, OMS) bereitzustellen. Diese Funktionen sind abhängig vom Hersteller oder Systemintegrator des - das Datenübertragungssystem nutzende - Flugzeuges.

Eine Gruppe von Funktionen sind entweder Teil der Konfiguration des Sternverteilers (Dienste 520 und 521), Basis für dessen funktionale Implementation (Dienste 522 und 523) oder aber Erweiterungen zur Einbeziehung von anderen, luftfahrtspezifischen Datenbussen (Dienst 524). Diese Dienste runden die Gesamtfunktionaliät ab, ermöglichen aber auch eine Abgrenzung des Datenübetragungssystems gegenüber kommerziellen Implementationen.

Der Dienst 520 dient der Konfiguration des Sternverteilers in Abhängigkeit von der aktuellen Lage.

Zwei Szenarien sind möglich und in Bezug auf die Auslegung des gesamten Datenübertragungssystemes auswählbar. Zum einen ist die Erkennung der eigenen Position relativ zu der physikalischen Position innerhalb der Architektur möglich. Dies kann durch einen Kodierstecker (traditionell ein sog. "Pin Programming", bei dem eine gewisse Anzahl von Steck-Kontakten auf ausgewählte Spannungen fest verdrahtet werden) oder ein externes, in das Luftfahrtzeug bauseitig integriertes Bauteil (z.B. Festwertspeicher) geschehen, welches eine Information über die Lage trägt. In diesem Fall ist die physikalische Position prinzipiell unabhängig von der Netzwerktopologie. Die zweite Variante nutzt eben diese Topologie aus und erkennt die Lage der Sternverteiler innerhalb der Topologie relativ zueinander. In diesem Fall ist die Netzwerktopologie prinzipiell unabhängig physikalischen Position. Der prinzipielle Ablauf der Konfiguration soll nach Einführung in andere betroffene Dienste beschrieben werden.

Generell findet die Weiterleitung von Rahmen mit Hilfe des Dienstes 502 statt. Dieser bedient sich der Informationen des Dienstes 521. Auch die Dienste 503, 504 und 505 bedienen sich der jeweiligen Informationen des Dienstes 521. Es ist dabei in diesem Zusammenhang unerheblich, wie die Dienste implementiert sind und ihre Informationen austauschen. Es ist ebenfalls unerheblich, wo der Dienst 521 die Information ablegt: intern innerhalb des Sternverteilers oder extern (z.B. ebenfalls im bauseitig in das Luftfahrtzeug zur Lagebestimmung integrierte Bauteil). Im einfachsten Fall steht beispielsweise dem Dienst 502 eine statisch erzeugte Tabelle zur Verfügung, aus der dieser mit Hilfe der Zieladresse die zur Weiterleitung Ausgänge ermittelt. Im Zusammenhang mit dem erfindungsgemäßen Datenübertragungssystem ist abweichend von kommerziellen Lösungen ausschließlich statisch definierte Information zulässig. Die wegen der notwendigen Flexibiliät im Umgang mit ä priori unbekannten Netzwerkkomponenten in kommerziellen Lösungen verwendeteten Methoden des "Lernens und Vergessens" von Zusammenhängen zwischen Zieladressen und Ausgängen des Sternverteilers stehen den Anforderungen an Vorhersagbarkeit der Datenweiterleitung und garantierter Verfügbarkeit des hier behandelten Datenübertragungssystemes entgegen.

Zum Zeitpunkt der Konfiguration ist dem Dienst 521 die Information zugänglich zu machen, die dieser an den Dienst 502 während des laufenden Betriebes zur Verfügung stellt. Dem Dienst 521 ist dabei nicht notwendigerweise die Information in genau dem Format zugänglich zu machen, in dem die Dienste 502, 503, 504 oder 505 diese benötigten. Dies kann entweder mit einem geeigneten, direkt an den Sternverteiler angeschlossenen Ladegerät geschehen oder aber mit einem an das Netzwerk angeschlossenen Lader, von dem der zu ladende Sternverteiler erreicht werden kann. Die hierfür verwendeten physikalischen Schnittstellen und Protokolle sind für die Implementation im Sinne dieses Datenübetragungssystemes unerheblich. Üblicherweise werden jedoch Geräte und Verfahren bevorzugt, die auch anderen luftfahrtspezifischen Standards (z.B. Arinc) genügen. Die Auswahl der zu ladenden Daten findet auf Basis der Ergebnisse des Dienstes 520 statt. Beispielsweise ist die Auswahl der zu ladenden Information im Falle eines direkt an den Sternverteiler angeschlossenen Laders unter Ausnutzung der physikalischen Position trivial: die Erkennung der Position geschieht durch den Benutzer des Laders und damit die Auswahl der zu ladenden Information. Im beispielhaft ausgewählten Falle eines Sternverteilers, der über eine Netzwerkverbindung geladen werden soll, ist ein geeignetes Protokoll notwendig, welches dem Lader eindeutig die Lage des Sternverteilers (physikalisch oder logisch) zur Auswahl der zu ladenden Information übermittelt. Die Auswahl auch dieses Protokolls ist abhängig von der Implementation des Datenübertragungssystemes. Alternativ ist weiterhin eine feste Einbettung der dem Dienst 521 zugängliche Information in den Sternverteiler oder das an ihn angeschlossene, bauseitig in das Luftfahrtzeug zur Lagebestimmung integrierte Bauteil denkbar, wegen der mangelnden Flexibiliät aber nur in wenigen Implementationen sinnvoll. Dennoch soll diese Variante Erwähnung finden, da sie eine Realisierung eines konformen Datenübertragungssystemes darstellt.

Die Dienste 522 und 523 stellen Funktionen bereit, die den internen Funktionsablauf beeinflussen. Der Dienst 522 stellt innerhalb der Funktion des Dienstes 502 sicher, daß die durch den Sternverteiler empfangenen Rahmen in einer vorhersagbaren Form weitergeleitet werden. Folgendes Beispiel beschreibt die Funktionsweise des Dienstes: Es seien die Eingänge des Sternverteilers ringförmig angeordnet. Alle Eingänge werden grundsätzlich immer in der gleichen Reihenfolge (z.B. im Uhrzeigersinn) bedient. Jeder Rahmen, der den Anforderungen der Dienste 503-507 entsprochen hat, wird unabhängig von jedem Eingang and den Dienst 522 zur Weiterleitung gemeldet. Es sei prinzipiell möglich, daß innerhalb eines implementationsabhängigen und nicht näher beschriebenen Intervalls mehrere Rahmen zur Weiterleitung angemeldet werden können. Der Dienst 522 habe zuletzt einen Rahmen des Einganges N weitergeleitet. Wird nun ein weiterer Rahmen am Eingang P gemeldet, wird dieser unmittelbar bedient. Es ist nicht erlaubt, die unter Umständen zwischen den Eingängen N und P liegenden Eingänge auf das Vorhandensein von Rahmen zur Weiterleitung zu prüfen. Danach warte der Dienst am Eingang P auf weitere Meldungen. Werden nun gleichzeitig mehrere Rahmen zur Weiterleitung angemeldet, wird zunächst der Eingang bedient, der in der o.a. Reihenfolge dem Eingang P am nächsten ist. Dieser Vorgang findet solange statt, bis alle Meldungen bearbeitet und alle Rahmen weitergeleitet worden sind. Werden allgemein innerhalb der Bearbeitungszeit eines oder mehrerer Rahmen ein oder mehrere weitere Rahmen gemeldet, findet dessen bzw. deren Bearbeitung jeweils im Anschluß statt. Es sei besonders darauf hingewiesen, daß das Beispiel lediglich das logische Verhalten, nicht jedoch eine Implementation beschreibt.

Der Dienst 523 stellt eine optionale Erweiterung der Basisfunktionalität bereit, die im Falle eines Netzwerkfehlers alternative Routen zur Weiterleitung bereitstellt. Hierzu sind dem Dienst 521 Informationen bezüglich der alternativen Routen zusätzlich zu den Standardrouten zur Verfügung zu stellen. Der Dienst 523 hat die Aufgabe, Netzwerkfehler zu erkennen und dem Dienst 521 als aktive Route mitzuteilen. Für die Interaktion zwischen den Diensten 521 und 523 ist es dabei in diesem Zusammenhang unerheblich, wie die Dienste implementiert sind und wie sie ihre Informationen austauschen. Im einfachsten Fall steht beispielsweise dem Dienst 521 eine Markierung je möglichem Ausgang innerhalb der statisch erzeugte Tabelle zur Verfügung, mit deren Hilfe er die zur Weiterleitung gültigen Ausgänge ermittelt. Wegen der Auswirkungen auf die Netzwerkkonfiguration ist diese Funktion nicht zentraler Bestandteil des Datenübertragungssystemes und optional integrierbar.

Eine Erweiterungen zur Einbeziehung von anderen, luftfahrtspezifischen Datenbussen (z.B. Arinc 429) stellt der Dienst 524 dar. Grundsätzlich ist das an den Sternverteiler angeschlossene physikalische Medium von untergeordneter Bedeutung. Die bereits früher ausgeführt, ist die Funktion eines Sternverteilers für das erfindungsgemäße Datenübertragungssystem auf der OSI Ebene 2 angesiedelt. Bisher ist davon ausgegangen worden, daß neben dem Rahmenformat nach IEEE 802.3 auch die physikalische Ebene diesem Standard entspricht. Es ist aber durchaus möglich, Rahmen nach IEEE 802.3 unabhängig von dem physikalischen Transportmedium weiterzuleiten. In diesem Fall gelten alle bisher definierten Regeln und Dienste. Die Funktionen der Dienste 507 bzw. 508 sind abhängig vom gewählten Medium analog zu der o.a. Beschreibung.

Nachfolgend sollen die wichtigsten Funktionen und Eigenschaften des erfindungsgemäßen Übertragungssystems noch einmal zusammengefaßt werden. Darüberhinaus sind jedoch weitere Funktionen denkbar, die die Anwendungsbereiche, die Betriebssicherheit sowie je nach der konkreten Anwendung andere Aspekte erweitern und / oder verbessern können.

Kollisionsfreie Übertragung: alle Übertragungen werden durch Brückenfunktionen miteinander verbunden. Dadurch sind keine Kollisionen von Datenpaketen möglich. Die Verbindungszeit der Brücken sowie der Mechanismus zur Einstellung des oder der korrekten Ausgangskanäle wird durch die Bandbreite aller Eingangs- sowie des / der Ausgangskanäle bestimmt.

Im Gegensatz zu herkömmlichen Netzwerken sind auch Punkt-zu-Punkt Verbindungen möglich.

Virtuelles Netz: im Gegensatz zu herkömmlichen Netzwerken sind auch Verbindungen innerhalb mehrere Gruppen möglich. Dies wird durch eine tabellengesteuerte Gruppenadressierung erreicht.

Paket-Integrität: alle Datenpakete werden innerhalb einer Brücke auf Integrität geprüft und entsprechend behandelt. Die Datenpakete müssen manipuliert werden, wenn die Adressen von einem Schema in ein anderes übertragen werden, wie zum Beispiel beim Übergang von Arinc 429 auf einen IEEE-standardisierten Bus.

Prioritäten: die Reihenfolge der Behandlung innerhalb einer Brücke kann an zwei Stellen, nämlich beim Empfangen und beim Senden durch Prioritäten beeinflußt werden. Beim Empfangen arbeitet eine konventionelle Brücken alle Eingänge nacheinander ab. Die Prioritäten werden als Kriterium für die Auswahl des nächsten zu behandelnden Eingangs verwendet. Beim Senden werden in herkömmlichen Brücken die Datenpakete ohne Berücksichtigung der Dringlichkeit in Werteschlangen eingereiht. Die Prioritäten erlauben das Sortieren von Datenpaketen. Grundsätzlichen können Prioritäten auch innerhalb einer Brücke dynamisch auf der Basis eines Alterungsprozesses verändert und entsprechend neu sortiert werden.

Begrenzte Blocklänge: durch die Begrenzung der Blocklänge auf einen minimalen Wert von zum Beispiel 64 Octets (einschließlich vorgeschriebener Adreß- und Kontrollfelder) läßt sich eine feine Granularität der Datenübertragung erreichen, die für Anwendungen insbesondere bei der Bild- oder Tonübertragung unerläßlich ist. Damit wird eine dem ATM entsprechende Funktion realisiert.

Transparentes Rerouting: Wenn ein Ausgang defekt ist, wird über einen Alternativeintrag in einer Routingtabelle ein anderer Ausgang für den Versand des Datenpakets gewählt. Eine statische Tabelle sowie ein dynamisches Verfahren stehen zur Erweiterung mit Peripherieeinheiten zur Verfügung. Auch wenn kein Fehlerfall vorliegt, kann der Datenstrom zwischen den Brücken mit Hilfe des Reroutings optimiert werden.

Aktive Senderkontrolle: im Fall eines fehlerhaften Senders wird der entsprechende Eintrag in der Tabelle "abgeschaltet" und sein Datenstrom ignoriert.

Fehlererkennung und Fehlerbehandlung: durch die statische Struktur der Tabellen können Geräte, die irrtümlich an bestimmte Eingänge angeschlossen werden, sicher erkannt werden. Fehler in der Verkabelung zwischen Peripherieeinheiten und Brücken werden von einer Brücke auch im Falle einer Sendepause der entsprechenden Peripherieeinheit erkannt. Zu diesem Zweck sendet die Brücke in zeitlich genau definierten Abständen und zu genau definierten Bedingungen Anfragen an die Peripherieeinheit und wertet die Antworten aus.

Network Management (NM): Alle Funktionen der Bordkommunikation sind mit Schnittstellen ausgestattet. Ein separater Prozeß in dem Datenübertragungssystem überwacht die Funktion und die Leistungsfähigkeit, erzeugt Statistiken, beeinflußt die Konfiguration und meldet Fehler an externe Systeme.

## Patentansprüche

1. Datenübertragungssystem für Luftfahrzeuge, welches durch ein Gesamtnetzwerk (GN) mit mindestens zwei Teilnetzwerken (1, 2, ...n) gebildet ist, von denen mindestens eines einen Sternverteiler (301) aufweist, der jeweils mit mindestens einer Peripherieeinheit (302) verbunden ist, **dadurch gekennzeichnet, dass** der mindestens eine Sternverteiler so geschaltet ist, dass jedes Teilnetzwerk für die damit verbundenen Peripherieeinheiten einen Kreuzverteiler darstellt, mit einem Datenprotokoll, das auf einer durch die IEEE festgelegten Rahmenstruktur basiert, die um ein erstes Feld (R/Id) zur Redundanzidentifikation erweitert ist, mit dem in einer empfangenden Peripherieeinheit eine Filterung von identischen, mehrfach empfangenen Rahmen durchgeführt wird, und / oder die um ein zweites Feld (M/Id) zur Identifikation einer Nachricht im Falle einer periodischen Datenübertragung erweitert ist, wobei die mindestens zwei Teilnetzwerke (1, 2, ...n) entweder vollständig separat aufgebaut oder auf einer höheren logischen Kommunikationsebene miteinander gekoppelt sind.

2. Datenübertragungssystem nach Anspruch 1, **dadurch gekennzeichnet, dass** mindestens eines der Teilnetzwerke (1, 2, ...n) entsprechend der Ebene 2 des OSI- (Open Systems Interconnection) Referenzmodells implementiert ist.

3. Datenübertragungssystem nach Anspruch 1 oder 2, **dadurch gekennzeichnet, dass** die höhere logische Kommunikationsebene eine Ebene 3 des OSI-Referenzmodells ist.

4. Datenübertragungssystem nach einem der vorhergehenden Ansprüche, **dadurch gekennzeichnet, dass** mindestens eines der Teilnetzwerke (1, 2, ...n) einen Konverter (303) aufweist, über den eine Verbindung zu anderen Datenübertragungssystemen herstellbar ist.

5. Datenübertragungssystem nach Anspruch 1, **dadurch gekennzeichnet, dass** in mindestens eine der Peripherieeinheiten (302) Kommunikationsfunktionen implementiert sind, die periodische Sende- und Empfangsdienste (401; 411) umfassen, mit denen Nachrichten zusammengestellt, identifiziert, adressiert und in ein sendefähiges Format codiert werden können.

6. Datenübertragungssystem nach Anspruch 5, **dadurch gekennzeichnet, dass** in mindestens eine der Peripherieeinheiten (302) ein Prioritätsdienst (404) implementiert ist, mit dem die Übertragung von angeforderten Datensätzen nach ihrer Priorität, die durch die Übertragungscharakteristik, das Zeitverhalten sowie den Protokolltyp bestimmt wird, sortiert wird.

7. Datenübertragungssystem nach Anspruch 5 oder 6, **dadurch gekennzeichnet, dass** in mindestens eine der Peripherieeinheiten (302) ein Redundanzdienst (405) zur transparenten Übertragung von Senderahmen über parallele Teilnetzwerke (1, 2, ...n) implementiert ist, mit dem jeder Senderahmen mit einer durch eine empfangende Peripherieeinheit auswertbaren Identifikation versehen wird.

8. Datenübertragungssystem nach einem der Ansprüche 5 bis 7, **dadurch gekennzeichnet, dass** in mindestens eine der Peripherieeinheiten (302) mindestens ein Medien-Zugriffsdienst (407) implementiert ist, der den logischen Zugang zu einem Teilnetzwerk (1, 2, ...n) für einen Senderahmen regelt.

9. Datenübertragungssystem nach Anspruch 8, **dadurch gekennzeichnet, dass** der Medien-Zugriffsdienst (407) jeweils eine physikalische Ebene (408) beaufschlagt, mittels der mindestens jeweils ein zusätzliches Sende- und Empfangs-Statussignale übertragen wird.

10. Datenübertragungssystem nach einem der vorhergehenden Ansprüche, **dadurch gekennzeichnet, dass** der mindestens eine Sternverteiler (301) ein Empfangsteil (E) und ein Sendeteil (S) aufweist, die jeweils einen Medien-Zugriffsdienst (506, 509) und eine physikalische Ebene (507; 508) umfassen.

11. Datenübertragungssystem nach Anspruch 10, **dadurch gekennzeichnet, dass** das Empfangsteil (E) des mindestens einen Sternverteilers (301) einen Dienst (505) zum Prüfen der Gültigkeit einer Absenderadresse umfaßt.

12. Datenübertragungssystem nach Anspruch 10 oder 11, **dadurch gekennzeichnet, dass** das Empfangsteil (E) des mindestens einen Sternverteilers (301) einen Dienst (504) zum Prüfen der Gültigkeit einer Zieladresse umfaßt.

## Claims

1. Data transmission system for aircraft, formed by an overall network (GN) with at least two partial networks (1, 2, ...n), at least one of which has a star hub (301), connected in each case to at least one peripheral unit (302), **characterised in that** the at least one star hub is switched in such a way that each partial network represents a cross hub for the thereto connected peripheral units, with a data protocol based on a frame structure laid down by the IEEE, being extended by a first field (R/Id) for redundancy identification, with which in a receiving peripheral unit filtering of identical, multiply received frames is performed, and/or being extended by a second field (M/Id) for identification of a message in the case of periodic data transmission, wherein the at least two partial networks (1, 2, ...n) are either constructed completely separately or are coupled to one another at a higher logical communication level.

2. Data transmission system according to claim 1, **characterised in that** at least one of the partial networks (1, 2, ...n) is implemented corresponding to level 2 of the OSI (Open Systems Interconnection) reference model.

3. Data transmission system according to claim 1 or 2, **characterised in that** the higher logical communication level is a level 3 of the OSI reference model.

4. Data transmission system according to one of the preceding claims, **characterised in that** at least one of the partial networks (1, 2, ...n) has a converter (303), via which a connection to other data transmission systems can be produced.

5. Data transmission system according to claim 1, **characterised in that** in at least one of the peripheral units (302) communication functions are implemented, comprising periodic transmitting and receiving services (401; 411), with which messages can be composed, identified, addressed and coded into a transmittable format.

6. Data transmission system according to claim 5, **characterised in that** in at least one of the peripheral units (302) a priority service (404) is implemented with which the transmission of requested data records is sorted according to their priority, which is decided by the transmission characteristics, the runtime performance and the type of protocol.

7. Data transmission system according to claim 5 or 6, **characterised in that** in at least one of the peripheral units (302) a redundancy service (405) for transparent transmission of transmit frames is implemented via parallel partial networks (1, 2, ...n), with which each transmit frame is provided with an identification capable of being evaluated by a receiving peripheral unit.

8. Data transmission system according to one of claims 5 to 7, **characterised in that** in at least one of the peripheral units (302) at least one media access service (407) is implemented, which controls the logical access to a partial network (1, 2, ...n) for a transmit frame.

9. Data transmission system according to claim 8, **characterised in that** the media access service (407) in each case impacts on a physical level (408), by means of which at least one additional transmitting and receiving status signal in each case is transmitted.

10. Data transmission system according to one of the preceding claims, **characterised in that** the at least one star hub (301) has a receiving section (E) and a transmitting section (S), which in each case comprise a media access service (506, 509) and a physical level (507; 508).

11. Data transmission system according to claim 10, **characterised in that** the receiving section (E) of the at least one star hub (301) comprises a service (505) for checking the validity of a sender address.

12. Data transmission system according to claim 10 or 11, **characterised in that** the receiving section (E) of the at least one star hub (301) comprises a service (504) for checking the validity of a destination address.

## Revendications

1. Système de transmission de données pour avions, formé d'un réseau global (GN) comprenant au moins deux sous-réseaux (1, 2, .., n), parmi lesquels l'un au moins comporte un concentrateur de réseau en étoile (301) auquel est reliée chaque fois au moins une unité périphérique (302), **caractérisé par le fait que** le concentrateur, au nombre d'au moins un, est connecté d'une manière telle que chaque sous-réseau représente pour les unités périphériques qui lui sont connectées un commutateur avec un protocole de données, qui est basé sur une structure à trames définie par la norme IEEE, élargie avec une première zone (R/Id) pour l'identification de redondances, grâce à laquelle les trames identiques reçues plusieurs fois sont filtrées dans une unité périphérique réceptrice, et/ou élargie avec une deuxième zone (M/Id) pour l'identification d'un message dans le cas d'une transmission de données périodique, les sous-réseaux (1, 2, .., n), au nombre d'au moins deux, étant soit totalement indépendants, soit couplés entre eux au niveau d'une couche de communication logique supérieure.

2. Système de transmission de données selon la revendication 1, **caractérisé par le fait qu'**au moins un des sous-réseaux (1, 2, ..., n) est implémenté conformément à la couche 2 du modèle de référence OSI (Open System Interconnection (Interconnexion de Systèmes Ouverts)).

3. Système de transmission de données selon la revendication 1 ou 2, **caractérisé par le fait que** la couche de communication logique supérieure est une couche 3 du modèle de référence OSI.

4. Système de transmission de données selon une des revendications précédentes, **caractérisé par le fait qu'**au moins un des sous-réseaux (1, 2, ..., n) comporte un convertisseur (303) par l'intermédiaire duquel une liaison avec d'autres systèmes de transmission de données peut être réalisée.

5. Système de transmission de données selon la revendication 1, **caractérisé par le fait que** dans au moins une des unités périphériques (302) sont implémentées des fonctions de communication, qui comprennent des services d'envoi et de réception (401, 411) périodiques, par lesquels des messages peuvent être établis, identifiés, adressés et codés dans un format permettant l'envoi.

6. Système de transmission de données selon la revendication 5, **caractérisé par le fait que** dans au moins une des unités périphériques (302) est implémenté un service de priorité (404), par lequel la transmission de jeux de données appelés est triée en fonction de la priorité de ceux-ci, laquelle est déterminée par la caractéristique de transmission, la fonction de transfert et le type de protocole.

7. Système de transmission de données selon la revendication 5 ou 6, **caractérisé par le fait que** dans au moins une des unités périphériques (302) est implémenté un service de redondance (405), pour la transmission transparente de trames d'envoi via des sous-réseaux (1, 2, .., n) parallèles, par lequel chaque trame est pourvue d'une identification exploitable par une unité périphérique réceptrice.

8. Système de transmission de données selon une des revendications 5 à 7, **caractérisé par le fait que** dans au moins une des unités périphériques (302) est implémenté un service d'accès à des moyens (407), qui gère l'accès logique à un sous-réseau (1, 2, .., n) pour une trame d'envoi.

9. Système de transmission de données selon la revendication 8, **caractérisé par le fait que** le service d'accès à des moyens (407) agit chaque fois sur une couche physique, au moyen de laquelle au moins un signal d'état d'envoi et de réception supplémentaire est transmis.

10. Système de transmission de données selon une des revendications précédentes, **caractérisé par le fait que** le concentrateur de réseau en étoile (301), au nombre d'au moins un, présente une partie réception (E) et une partie envoi (S), qui comprennent chacune un service d'accès à des moyens (506, 509) et une couche physique (507, 508).

11. Système de transmission de données selon la revendication 10, **caractérisé par le fait que** la partie réception (E) du concentrateur de réseau en étoile (301), au nombre d'au moins un, comporte un service (505) pour vérifier la validité d'une adresse d'expéditeur.

12. Système de transmission de données selon la revendication 10 ou 11, **caractérisé par le fait que** la partie réception (E) du concentrateur de réseau en étoile (301), au nombre d'au moins un, comporte un service (504) pour vérifier la validité d'une adresse de destinataire.
